# NEUE EUROPÄISCHE PATENTSCHRIFT

(11) **EP 0 491 170 B2**
(45) Veröffentlichungstag und Bekanntmachung des Hinweises auf die Entscheidung über den Einspruch: **19.05.2004**
(45) Hinweis auf die Patenterteilung: 08.05.1996
(21) Anmeldenummer: 91119596.4
(22) Anmeldetag: 16.11.1991
(51) Int. Cl.: C08F 2/44, C08K 13/04, C08K 7/00

(54) **Gegossene Kunststofformteile**
Molded plastic articles
Pièces moulées en matière plastique

(30) Priorität: 19.12.1990 DE 4040602
(43) Veröffentlichungstag der Anmeldung: 24.06.1992
(73) Patentinhaber: Schock GmbH, 73614 Schorndorf (DE)
(72) Erfinder: Hock, Klaus, Dr., W-8370 Regen (DE); Frank, Lothar, W-7067 Plüderhausen (DE); Schock, Friedrich, sen., W-7060 Schorndorf (DE)
(74) Vertreter: Patentanwälte Bartels und Partner

(56) Entgegenhaltungen:
- EP-A- 0 000 783
- EP-A- 0 351 337
- DE-A- 1 544 661
- DE-A- 2 811 795
- FR-A- 2 049 486
- JP-A- 6 227 363
- DATABASE WPIL Section Ch, Week 8823, 28. April 1988 Derwent Publications Ltd., London, GB; Class A32, AN 88-157881 & JP-A-63097656

## Beschreibung

Die Erfindung betrifft gegossene Kunststofformteile mit einer organischen Polymer-Matrix, welche mit einem granularen anorganischen Füllstoff gefüllt ist und eine weitere Komponente aus einem blättchenförmigen Material zumindest im Oberflächenbereich des Formteils enthält. Materialien dieses Typs sind aus der DE-A-28 11 795 bekannt.

Kunststofformteile mit einer mit einem partikelförmigen Füllstoff gefüllten Kunststoffmatrix sind beispielsweise als Arbeitsplatten, als Spülen, im Sanitärbereich und so weiter in weitem Maße im Einsatz.

Unter gegossenen Kunststofformteilen soll im vorliegenden Fall neben den genannten Formteilen auch eine einfache, für die weitere Verarbeitung, beispielsweise im Küchenmöbelbereich, vorgesehene Platte fallen. Ebenso können unter Kunststofformteile jegliche Art von Abschlußleisten oder Dekorierten fallen.

Die Kunststofformteile, die aus dem Stand der Technik bekannt sind, weisen häufig eine Polymer-Matrix aus Polyester-oder Polyacrylharzen auf, und als partikelförmige anorganische Füllstoffe werden neben Quarzmehlen, Quarzsand, Cristobalitmehl, Cristobalitsand auch Aluminiumoxidpulver in Form von Aluminiumtrihydroxid verwendet.

Nachteilig bei allen diesen Kunststofformteilen ist, daß insbesondere bei den eingefärbten Kunststofformteilen Kratzer als helle bis weiße Spuren sichtbar bleiben und daß Farbflecke, die insbesondere durch intensivfärbende Flüssigkeiten wie Kaffee, Tee, Fruchtsäfte und so weiter entstehen, sehr schlecht entfernbar sind. Selbst im Falle, daß die Flecken entfernt werden können, bleiben dann durch die zum Einsatz kommenden Scheuermittel deutlich sichtbare Kratzspuren zurück.

Aufgabe der Erfindung ist es, gegossene Kunststofformteile besser pflegbar zu machen, das heißt insbesondere die Reinigung zu erleichtern und die Teile kratzunempfindlicher zu machen.

Diese Aufgabe wird bei den eingangs beschriebenen Kunststofformteilen erfindungsgemäß dadurch gelöst, daß die mittlere Ausdehnung des blättchenförmigen Materials größer oder gleich der halben mittleren Korngröße des granularen Füllstoffes ist und daß der Anteil des blättchenförmigen Materials im Bereich von ca. 0,5 bis 4 Gew. %, bezogen auf die Gießmasse, liegt, wobei das blättchenförmige Material mit einer Vorzugsorientierung in der Polymermatrix parallel zur Oberfläche des Formteils angeordnet ist, und wobei das Verhältnis der Dicke zur Ausdehnung der Partikel des blättchenförmigen Materials im Mittel kleiner oder gleich 0,02 beträgt.

Als blättchenförmiges Material werden im Zusammenhang mit der Erfindung flächig ausgebildete Partikel in Form von kleinen, dünnen Blättchen verstanden, welche in einer Ebene einen verhältnismäßig großen Durchmesser und eine relativ glatte Oberfläche aufweisen und senkrecht zu dieser Ebene eine vergleichsweise geringe Dicke besitzen. Bevorzugt ist das blättchenförmige Material transparent.

Überraschenderweise wurde gefunden, daß erfindungsgemäße Kunststofformteile, die zumindest im Oberflächenbereich eine blättchenförmige Komponente enthalten, wesentlich besser zu reinigen sind und daß auch bei Verwendung von scheuernden Reinigungsmitteln allenfalls wenig sichtbare Kratzspuren auf den Formteilen entstehen. Die Härte des blättchenförmigen Materials im Kunststofformteil entspricht ungefähr der Härte des anorganischen Füllstoffes.

Vorzugsweise wird das blättchenförmige Material anorganischen Ursprungs sein. Es eignen sich insbesondere Glimmer, Kaolin, blättchenförmiger Quarz (aus Quarzen mit Blatt- oder Bahnstruktur), Glasblättchen (Flakes) und Metallblättchen oder -flitter.

Für die Verwendung der Kunststofformteile im Küchen- und Sanitärbereich ist es wichtig, daß eine mögliche Wasseraufnahme durch das blättchenförmige Material bei Einwirkung von Wasser oder Wasserdampf unter den üblichen Umgebungsbedingungen in Küche und Bad zu keiner signifikanten Aufhellung führt.

Die als blättchenförmiges Material geeigneten Glimmerpartikel werden zur Verringerung ihrer Wasseraufnahmefähigkeit vorgeglüht, bevor sie einer Mischung zur Herstellung der gegossenen Kunststofformteile beigemischt werden.

Zusätzlich oder alternativ zu der thermischen Vorbehandlung kann die Wasseraufnahmefähigkeit durch eine Art Versiegelung stark herabgesetzt werden. Beispielsweise lassen sich Glimmerblättchen mit TiO₂ beschichten und gegen Wasseraufnahme versiegeln. Ausreichend ist eine polykristalline Beschichtung. Zur Versiegelung der Blättchen eignen sich auch Siliconverbindungen.

Alternativ oder in Kombination mit den Glimmerpartikeln können als blättchenförmiges Material ebenso schuppenartige Glaspartikel verwendet werden. Die Auswahl für das blättchenförmige Material ist - wie oben gezeigt - zwar nicht auf die Glimmerpartikel und die schuppenartigen Glaspartikel begrenzt, jedoch sind dies relativ leicht zugängliche und in ihren Materialeigenschaften reproduzierbar erhältliche Komponenten.

Die guten Oberflächeneigenschaften werden insbesondere dadurch erzielt, daß die Partikel des blättchenförmigen Materials in ihrer Anordnung eine Vorzugsorientierung aufweisen, die parallel zur Oberfläche des Formteils verläuft. Hierdurch ergibt sich eine besonders glatte, insbesondere auch fühlbar glatte Oberfläche des Formteils. Der Aufwand beim Reinigen ist hier deutlich geringer, das heißt die Fleckempfindlichkeit ist hierdurch stark reduziert.

Die Orientierung des blättchenförmigen Materials parallel zur Kunststofformteil-Oberfläche wird besonders einfach erhalten, wenn der Durchmesser der Partikel des blättchenförmigen Materials in einer Ebene im Mittel größer oder gleich 30 µm beträgt. In diesem Falle ist es möglich, den Teilchen relativ einfach eine Vorzugsorientierung in der Matrix aufzuprägen.

Die Dicke der Partikel des blättchenförmigen Materials kann in relativ weiten Bereichen variiert werden, sollte jedoch vorzugsweise 0,5 µm oder weniger betragen.

Für den Orientierungsgrad beziehungsweise die Vorzugsorientierung der Partikel des blättchenförmigen Materials ist das Verhältnis der Dicke der Partikel zum Durchmesser wichtig, wobei im Mittel dieses Verhältnis von Dicke zu Durchmesser kleiner oder gleich 0,02 gewählt wird.

Ferner ist auf das Verhältnis der Partikelgröße des partikelförmigen Füllstoffs und den Durchmesser der blättchenförmigen Partikeln in der Vorzugsebene zu achten, wobei bevorzugt der Blättchendurchmesser zur mittleren Partikelgröße wie 1:2 bis 1:1 gewählt wird. Beispielsweise harmonieren Blättchenfraktionen, deren Durchmesser von 30 µm bis 200 µm betragen besonders gut mit Partikeln, deren mittlere Größe bei 100 - 200 µm liegt.

Wird der Blättchendurchmesser im Verhältnis zur Partikelgröße zu klein gewählt, findet häufig eine Anlagerung der Blättchen an der Oberfläche der Partikel oder in einem dazu benachbarten Bereich statt, so daß diese dann nicht mehr in der Kunststoffmatrix zwischen den Füllstoffpartikeln und an der Formteiloberfläche verfügbar sind.

Allgemein gilt deshalb, daß bei groberen Füllstoffpartikeln eine verbesserte Reinigungsfreundlichkeit dann erreicht wird, wenn auch der mittlere Durchmesser des blättchenförmigen Materials vergrößert wird. Deshalb wird man einen mittleren Blättchendurchmesser wählen, der ungefähr gleich oder größer ist als der mittlere Durchmesser der Füllstoffpartikel.

Die mengenmäßige Zugabe des blättchenförmigen Materials zu der für die Herstellung der Kunststofformteile verwendeten Gießmasse soll 0,5 bis 4 gew % (bezogen auf die Gießmasse) betragen , da bei deutlich kleineren Anteilen kein nennenswerter Effekt mehr erzielt wird. Bei dieser Zumischungsmenge werden 10 % oder mehr der Formteiloberfläche mit Glimmerplättchen belegt sein.

Insbesondere wenn größere Mengen des blättchenförmigen Materials der Gießmasse zugesetzt werden, können diese als Ersatz für einen Teil des anorganischen Füllstoffes dienen.

Nach oben hin wird der Anteil des blättchenförmigen Materials auf 4 Gew.% (bezogen auf die Gießmasse) oder weniger begrenzt sein, da in der Regel das blättchenförmige Material teurer als der partikelförmige anorganische Füllstoff ist. Eine weitere merkliche Verbesserung der Kratzunempfindlichkeit und der Reinigungsfreundlichkeittritt bei größer werdenden Anteilen des blättchenförmigen Materials nicht mehr ein. Vielmehr kann sich bei hohen Anteilen sogar eine gegenseitige Behinderung der Blättchen bei der Ausrichtung ergeben, so daß die Vorteile teilweise wieder verlorengehen können. Während man in dem bevorzugten Bereich der Blättchenanteile keinen wesentlichen Anstieg der Viskosität der fertigen Mischung durch die Zugabe der blättchenförmigen Komponente beobachtet, ergibt sich bei zu hohen Anteilen ein deutlicher Viskositätsanstieg.

Eine besonders hohe Kratzunempfindlichkeit wird dann erreicht, wenn das blättchenförmige Material so ausgewählt wird, daß es einen Brechungsindex aufweist, der auf den Brechungsindex der Polymer-Matrix abgestimmt ist, das heißt wenn die Brechungsindizes des blättchenförmigen Materials und der Polymer-Matrix ungefähr gleich sind. Kratzspuren fallen bei diesen Formteilen besonders wenig auf.

Als blättchenförmiges Material läßt sich überraschenderweise auch ein Glimmermaterial einsetzen, das aus sonstigen Anwendungen als Subtraktiv-Farbstoff bekannt ist. Unter dem registrierten Warenzeichen IRIODIN vertreibt die Firma Merck, Darmstadt, Farbstoffe diesen Typs, bei dem Glimmerpartikel ganzflächig mit weiteren Schichten aus Wismutoxid, Titanoxid, Eisenoxid, etc. versehen sind, wodurch sich durch die Reflexion des Lichts an verschiedenen Oberflächen der Subtraktiv-Farbeffekt ergibt.

Die Verwendung dieser Iriodin®-Farbstoffe macht den Einsatz zusätzlicher Pigmente überflüssig und erreicht gleichzeitig denselben Effekt bei der Verbesserung der Pflegeleichtigkeit und Scheuerfestigkeit der Kunststofformteile wie das zuvor beschriebene blättchenförmige Material.

Es sind zwar schon Acrylharzplatten hergestellt worden, die mit Subtraktiv-Farbstoffen angefärbt worden sind, jedoch ist der Zusatz von solchen blättchenförmigen Materialien als Farbstoffe zu gefüllten Kunststofformteilen unbekannt, wohl insbesondere auch deshalb, weil die Herstellerin der sogenannten IRIODIN®-Farbstoffe in ihren Datenblättern bereits die Vermeidung von pyrogener Kieselsäure zur Thixotropierung der angefärbten Massen empfiehlt, weil kleinste Mengen an Füllstoffen den Farbeffekt reduzieren.

Als Einsatzgebiete der IRIODIN®-Farbstoffe sind ferner bereits die Verwendung in sogenannten Metalliclackierungen oder auch in Gelcoat-Verfahren bekannt. Gebräuchliche IRIODIN®-Pigmentzusätze liegen dabei bei 10-25 %.

Überraschenderweise hat sich gezeigt, daß sich entgegen dem Verarbeitungshinweis des Herstellers der IRIODIN®-Farbstoffe ein sehr guter Farbeffekt mit den Subtraktiv-Farbstoffen auf Glimmerbasis erzielen läßt, wenn diese in gefüllten Kunststoffen als farbgebende Komponente eingesetzt werden.

Es ergibt sich mit diesen Farbstoffen bei den erfindungsgemäßen Kunststofformteilen eine besonders tiefe Tönung mit den den IRIODIN®-Farbstoffen eigenen interessanten zusätzlichen optischen Effekten.

Der positive Effekt ergibt sich auch bei Kunststofformteilen, die hoch gefüllt sind, das heißt bei denen der anorganische Füllstoff mit einem Anteil von circa 50 bis 80 Gew.% (bezogen auf die Gießmasse) enthalten ist. Auch bei diesen Kunststofformteilen entfalten die sogenannten IRIODIN-Farbstoffe ihre Wirkung.

Als anorganischer Füllstoff wird Quarzmehl, Quarzsand, Cristobalitsand, Al(OH)₃ oder Cristobalitmehl bevorzugt.

Als Polymer-Komponente zur Bildung der Matrix kommen eine breite Palette unterschiedlicher Kunststoffe in Frage, insbesondere Polyester-, Polyacryl- und Vinylesterharze, aber auch Polyurethan- oder Epoxydharze. Der Reaktionstyp bei der Bildung der Polymere spielt keine entscheidende Rolle

Die erfindungsgemäßen Formteile weisen gegenüber Formteilen, denen die blättchenförmige Komponente in der Kunststoffmatrix fehlt, eine deutlich verbesserte Rißfestigkeit in den üblichen Heiß-Kalt-Tests auf. Während sich bei herkömmlichen Formteilen, beispielsweise Spülen, im Verlauf der wechselweisen Bespülung des Formteils mit heißem und mit kaltem Wasser Mikrorisse bilden, die im Laufe der Zeit zum Lecken der Spüle führen, können sich bei den erfindungsgemäßen Spülen die Mikrorisse in der Polymermatrix nur bis zu den blättchenförmigen Partikeln ausbilden. Die Mikrorisse enden an der Oberfläche der blättchenförmigen Partikeln und können sich nicht in tiefere Bereiche der Formteilmatrix ausbreiten. In der Folge weisen die erfindungsgemäßen Spülen eine erhöhte Rißfestigkeit auf.

Die Erfindung betrifft weiterhin ein Verfahren zur Herstellung von gegossenen Kunststofformteilen aus einem, gegebenenfalls Vorpolymere enthaltenden Monomeren-Sirup, dem ein anorganischer Füllstoff zugemischt ist, wobei diese Mischung in die Gießform eingespeist und ausgehärtet wird. Ein solches Verfahren ist zur Herstellung von Kunststoffformteilen der zuvor beschriebenen Art üblich und wird in vielen Variationen angewandt.

Zur Herstellung von Formteilen, die die erfindungsgemäße verbesserte Pflegemöglichkeit, insbesondere die verbesserte Reinigungsmöglichkeit und die verbesserte Kratzunempfindlichkeit aufweisen, sind Abweichungen der bisher bekannten Verfahren notwendig. Eine weitere Aufgabe der Erfindung ist deshalb, ein entsprechendes Verfahren vorzuschlagen.

Die Lösung dieser Aufgabe besteht darin, daß dem Sirup vor dem Einspeisen in die Form eine aus blättchenförmigem Material bestehende Komponente zugemischt wird und daß die so erhaltene Dispersion so in die Form eingespeist wird, daß sich für die Anordnung der Partikel des blättchenförmigen Materials in der sich beim Aushärten bildenden Polymer-Matrix eine Vorzugsorientierung parallel zur Oberfläche der Kunststofformteile einstellt. Hierbei sind die Bedingungen so zu wählen, daß die Scherkraft zwischen Formenoberfläche und Dispersion möglichst immer im wesentlichen gleich gerichtet ist und möglichst ein Maximum an Scherkraft auftritt.

Bevorzugt wird bei solchen Verfahren ein Sirup verwendet, dessen Viskosität auf 60 bis 200 mPa.s eingestellt ist.

Der untere Grenzwert dieses Bereiches stellt sicher, daß ein ausreichender Orientierungsgrad der Blättchen in der Polymer-Matrix erreichbar ist, während der obere Grenzwert dadurch vorgegeben ist, daß bei höheren Viskositäten das Einspeisen des Sirups beziehungsweise der Gießmasse in die Form schwierig wird. Der bevorzugte Bereich der Viskosität des Sirups, das heißt also der flüssigen Komponente der Mischung noch ohne die anorganischen Füllstoffe und ohne das anorganische blättchenförmige Material, beträgt 80 bis 180 mPa.s.

Bevorzugt wird die optimale Viskosität des Sirups durch die Zugabe unterschiedlich großer Gehalte des Vorpolymeren eingestellt. Der Anteil des zuzugebenen Vorpolymeren ist selbstverständlich von der Kettenlänge des Vorpolymeren abhängig. Es können aber auch bekannte anorganische und organische Thixotropiermittel zum Einsatz kommen.

Bei der Wahl des Viskositätsbereiches des Sirups ist zu beachten, daß je nach Form und Partikelgröße des blättchenförmigen Materials bereits eine kleinere Viskosität für eine Ausrichtung der Partikel in einer Vorzugsorientierung ausreichend sein kann. Wenn z. B. relativ große flache Partikel den Hauptteil des blättchenförmigen Materials ausmachen, so reicht bereits eine geringere Viskosität des Sirups aus, um einen notwendigen Orientierungsgrad der Partikel parallel zur Oberfläche des Kunststoffformteils durch dabei auftretende Scherkräfte zu erzielen.

Werden dagegen kleinere Partikel verwendet oder Partikel mit einem ungünstigeren Verhältnis von Durchmesser und Dicke der Partikel, so empfiehlt es sich, einen höherviskosen Sirup einzusetzen.

Damit läßt sich das erfindungsgemäße Verfahren zur Herstellung der neuen Kunststofformteile auf unterschiedliche Anlagen-Konfigurationen und/oder Gegebenheiten der Gußformen einstellen.

Eine übliche Verarbeitungsviskosität der fertigen Gießmassen liegt im Bereich von 3000 bis 30 000 mPa.s, wobei die Partikelgröße des anorganischen Füllstoffs bis 200 µm und der Füllstoffgehalt bis 70 % betragen kann.

Vorzugsweise wird die fertige Gießmasse bei geringen Formentemperaturen (beispielsweise ca 50° C) in die Form gefüllt. Vorzugsweise wird die Fertige Hischung so in die Form eingespeist, daß sich bereits in den dabei verwendeten Zufuhrmitteln eine Vorzugsorientierung des blättohenförmigen Materials zumindestens teilweise einstellt. Die bei der vergleichsweise niederen Temperatur höhere Viskosität der Gießmasse führt zu einem guten Orientierungsgrad der blättchenförmigen Partikel parallel zur Formenoberfläche aufgrund der dabei auftretenden Scherkräfte. Nach der Befüllung der Form wird diese relativ schnell auf die Aushärtetemperatur, beispielsweise ca. 100° C, aufgeheizt, um den Polymerisationsprozeß zu starten. Die restliche Verfahrensführung unterscheidet sich nicht mehr wesentlich von den Verfahren zur Herstellung der herkömmlichen Formteile.

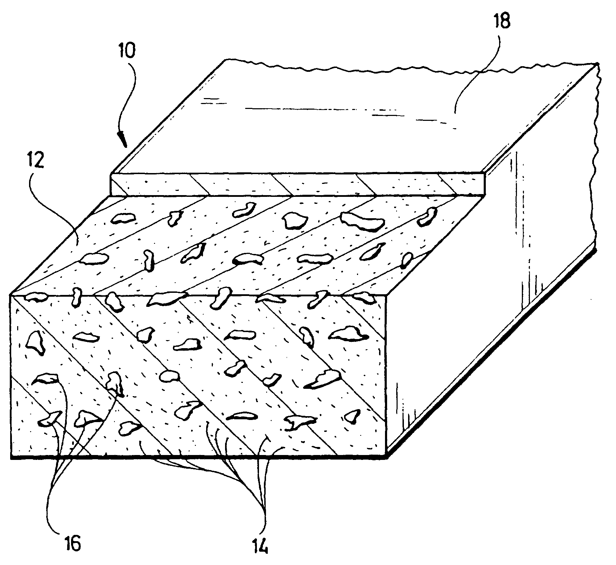

Diese und weitere Vorteile der Erfindung werden anhand der Zeichnung noch näher erläutert, welche eine vergrößerte, schematische Schnittansicht durch ein Kunststofformteil in Form einer Platte wiedergibt.

In der Figur ist ein Kunststofformteil in Form einer Platte 10 gezeigt. Die Platte umfaßt eine Kunststoffmatrix 12 aus Polyacrylharz, welche mit Quarz- oder Cristobalitmehl (partikelförmige Teilchen 14) hoch gefüllt ist.

Als zusätzliche Komponente ist in der Kunststoffmatrix 12 ein blättchenförmiges Material 16 enthalten, welches beispielsweise Glimmer oder ein auf Glimmerbasis hergestellter Subtraktivfarbstoff sein kann. Wie aus der schematischen Abbildung der Figur deutlich wird, sind die Blättchen 16 mit einer Vorzugsorientierung innerhalb der Kunststoffmatrix 12 angeordnet. Die Vorzugsorientierung ist im wesentlichen parallel zur Oberfläche 18 der Platte 10.

Der in der Figur ersichtliche Orientierungsgrad ist relativ hoch, d.h. beim Gießen der Masse in eine entsprechende Form wurde eine optimale Abstimmung der Viskosität des Sirups auf die Form und die Partikelgröße des blättchenförmigen Materials 16 erzielt. Bei solch hohen Orientierungsgraden des blättchenförmigen Materials 16 ist eine besonders leichte Reinigungsmöglichkeit und eine besonders hohe Scheuerunempfindlichkeit gegeben.

Weiterhin ist zu beachten, daß der Brechungsindex der Blättchen 16 im wesentlichen der Kunststoffmatrix aus Polyacryl angepaßt ist, d.h. der Brechungsindex der Polyacrylmatrix (PMMA) beträgt 1,492, während der Brechungsindex der Glimmerblättchen ungefähr 1,5 beträgt. Die Glimmerblättchen sollten mindestens thermisch vorbehandelt, besser noch gegen Wasseraufnahme zusätzlich versiegelt sein.

I m folgenden wird anhand der Beispiele der Effekt der erfindungsgemäßen Zusammensetzung der Kunststofformteile auf die Reinigungsfreundlichkeit und Scheuerbeständigkeit erläutert:

Die Mischungen der folgenden Beispiele werden unter Verwendung üblicher Gießformen zu Plattenmaterial verarbeitet und einem Reinigungs- und einem Scheuertest unterzogen.

### Reinigungstest:

Mit Hilfe eines Filzstiftes werden eine 3 mm und eine 1 mm breite Spur kreisförmig auf die ebene Probenoberfläche aufgebracht. Nach einer Trockenzeit von 1 Stunde werden die Spuren mit einem Kunststoff-Topfreiniger mit konstanter Andruckkraft 200mal bzw. 1000mal überfahren. Die verbleibenden Reste der Spuren werden visuell beurteilt und mit den Noten 1 bis 6 bewertet. Die Note 1 bedeutet das vollständige Entfernen der Filzstiftspuren, die Note 6 weist aus, daß kaum ein Reinigungseffekt erzielt wurde.

### Scheuertest:

Die Probe wird mit einem unglasierten Keramikgegenstand verkratzt. Die Oberfläche der Probe wird mit einem abrasiven Reinigungsmittel gereinigt. Das Aussehen der Oberfläche wird visuell beurteilt. Herkömmliche Werkstoffe zeigen sichtbare weiße Kratzer (Note 6). Die Note 1 bedeutet, daß nach der Reinigung mit dem abrasiven Mittel die Kratzspuren nicht mehr sichtbar sind.

### Beispiel 1

- 36 Gewichtsteile: Polymersirup (MMA/PMMA mit ca. 20 % Polymeranteil)
- 0,7 Gewichtsteile: eines üblichen Vernetzungsmittels
- 0,5Gewichtsteile: üblicher peroxidischer Katalysatoren
- 60 Gewichtsteile: eines Cristobalitmehls als partikelförmiger Füllstoff mit einer Korngrößenverteilung von 0 bis 200 µm, Schwerpunkt bei 30 µm - 40 µm
- 0,1 Gewichtsteile: einer hydrophoben Kieselsäure als Thixotropiermittel
- 1,4 Gewichtsteile: eines üblichen Formtrennmittels, beispielsweise Stearinsäure
- 1 Gewichtsteil: des Iriodin®-Farbstoffs 163 Flitterperl mit einer Teilchengröße von 30 µm - 200 µm

Daneben können die Farbtönungen noch mit Farbpasten beeinflußt werden, deren Anteile an der Mischung im Regelfall unter 0,1 Gewichtsteilen liegen.
Reinigungstest: Note 1 Scheuertest: Note 1

### Beispiel 2

Bei einer sonst gleichen Zusammensetzung wie in Beispiel 1 werden die Komponenten Polymersirup und der partikelförmige Füllstoff wie folgt verwendet:
- 30 Gewichtsteile: MMA/PMMA-Sirup mit ca. 20 %igem Polymeranteil
- 68 Gewichtsteile: Quarzmehl mit einer Teilchengrößenverteilung von 100 - 200 µm
Reinigungstest: Note 1 Scheuertest: Note 1

### Beispiel 3

- 25,5 Gewichtsteile: Sirup (wie Beispiel 1)
- 0,5 Gewichtsteile: Vernetzer
- 0,5 Gewichtsteile: peroxidischer Katalysator
- 73,5 Gewichtsteile: Quarzmehl mit folgenden 3 unterschiedlich gefärbten Hauptfraktionen:
50 Gewichtsteile mit einer Partikelgröße von 0 - 400 µm
22 Gewichtsteile mit einer Partikelgröße von 300 - 800 µm
1,5 Gewichtsteilen mit einer Partikelgröße von 100 - 200 µm
- 0,5 Gewichtsteile: Formtrennmittel
- 0,5 Gewichtsteile: des Iriodinfarbstoffs® 163 Flitterperl mit einer Teilchengröße von 30 µm - 200 µm
Reinigungstest: Note 1 Scheuertest: Note 1

### Beispiel 4

Bei der Beispielsrezeptur des Beispiels 1 werden die Anteile des blättchenförmigen Materials (Iriodinfarbstoff® 163 Flitterperl) im Bereich von 0,2 bis 3,2 Gewichtsteilen variiert. Die bei dem Reinigungs- und dem Scheuertest erhaltenen Ergebnisse sind in Tabelle I zusammengefaßt.

**Tabelle I**

| Gewichtsteile Iriodin® 163 | Scheuertest | Reinigungstest |
|---|---|---|
| 0,2 | 2 | 5 |
| 0,4 | 1 | 4 |
| 0,8 | 1 | 2 |
| 1,6 | 1 | 1 |
| 3,2 | 1 | 1 |

### Beispiel 5

Unter denselben Bedingungen wie in Beispiel 4 werden die Tests an Probenmaterial durchgeführt, das sich von dem in Beispiel 4 verwendeten nur dadurch unterscheidet, daß die Größe des blättchenförmigen Materials ≤20 µm beträgt (Iriodin® 120 Rutil Glanzsatin). Die Testergebnisse sind in Tabelle II zusammengefaßt.

**Tabelle II**

| Gewichtsteile Iriodin® 120 | Scheuertest | Reinigungstest |
|---|---|---|
| 0,2 | 5 | 2 |
| 0,4 | 4 | 3 |
| 0,8 | 3 | 3 |
| 1,6 | 2 | 3 |
| 3,2 | 2 | 2 |

### Beispiel 6

In dieser Testreihe werden Zusammensetzungen geprüft, die sich von der Beispielsrezeptur in Beispiel 1 ableiten. Die davon verschiedenen Komponenten und deren Anteile sind in den Tabellen IIIa und b enthalten, die auch die Testergebnisse zusammenfassen.

**Tabelle III a**

| Füllstoffpartikelgröße Cristobalit | Füllstoffgewichtsteile | Iriodin® 163 Gewichtsteile | Scheuertest | Reinigungstest |
|---|---|---|---|---|
| 0-40 µm | 60 | 0 | 6 | 3 |
| 0-40 µm | 60 | 1 | 1 | 1 |
| 0-100 µm | 60 | 0 | 6 | 3 |
| 0-100 µm | 60 | 1 | 1 | 1 |
| 0-200 µm | 60 | 0 | 6 | 3 |
| 0-200 µm | 60 | 1 | 1 | 1 |

**Tabelle III b**

| Füllstoffpartikelgröße Quarz | Füllstoffgewichtsteile | Iriodin® 163 Gewichtsteile | Scheuertest | Reinigungstest |
|---|---|---|---|---|
| 100-200 µm | 70 | 0 | 6 | 1 |
| 100-200 µm | 70 | 1 | 1 | 1 |
| 100 -800 µm | 75 | 0 | 1 | 5 |
| 100-800 µm | 75 | 1 | 1 | 2 |

Die Auswertung der gegebenen Beispiele zeigt, daß bei richtiger Auswahl der Größe der blättchenförmigen Teilchen im Verhältnis zu der Partikelgröße des anorganischen Füllstoffes auch bei in weiten Bereichen variierenden Füllstoffpartikelgrößen sehr gute Ergebnisse in bezug auf Reinigungsfreundlichkeit und Scheuerfestigkeit erzielt werden (vgl. Beispiele 1 bis 3).

Die in Beispiel 4 angegebene Testreihe zeigt, daß bei optimaler Wahl von Füllstoffpartikelgröße und Partikelgröße des blättchenförmigen Materials bereits ab Anteilen von ca. 0,5 Gew. % ausgezeichnete Scheuertestwerte und Reinigungstestwerte erhalten werden. Tabelle I zeigt darüber hinaus, daß bereits ab einem Anteil von ca. 1,6 Gew. % optimale Werte im Scheuertest und Reinigungstest erreicht werden.

In Beispiel 5 wird der Einfluß der Partikelgröße des blättchenförmigen Materials auf die Reinigungsfreundlichkeit und die Scheuerfestigkeit der Proben aufgezeigt. Selbst bei Anteilen von 3,2 Gew. % an der Zusammensetzung lassen sich keine sehr guten Scheuertest- und Reinigungstestwerte erreichen. Der Grund hierfür ist, daß ein Großteil der blättchenförmigen Materialien nicht an der Oberfläche der Probe zur Verfügung stehen, sondern sich um Füllstoffpartikel herum anlagern. Die Testreihe in Beispiel 5 (Tabelle II) zeigt allerdings ebenfalls, daß auch bei solchen ungünstigeren Verhältnissen mit entsprechend höherer Zugabe des blättchenförmigen Materials eine sehr deutliche Verbesserung der Scheuerfestigkeit und der Reinigungsfreundlichkeit erzielbar ist.

In der Testreihe des Beispiels 6 werden schließlich Proben mit unterschiedlich hohem partikelförmigem Füllstoffanteil und unterschiedlicher Füllstoffpartikelgröße Vergleichsproben gegenübergestellt, die kein blättchenförmiges Material enthalten.

Der direkte Vergleich verdeutlicht den enormen Einfluß, den bereits 1 Gew. % des blättchenförmigen Materials auf die Scheuerfestigkeit bzw. die Reinigungsfreundlichkeit der Proben hat. Diese Feststellung gilt über einen weiten Bereich der Füllstoffpartikeigrößen und auch für eine sehr hoch mit anorganischen Füllstoffpartikeln gefüllte Polymermatrix.

Insbesondere wird eine sehr gute Scheuerfestigkeit und Reinigungsfreundlichkeit nur unter Beimischung der blättchenförmigen Komponente erzielt.

## Patentansprüche

1. Gegossene Kunststofformteile mit einer organischen Polymer-Matrix, welche mit einem granularen anorganischen Füllstoff gefüllt ist und eine weitere Komponente aus einem blättchenförmigen Material zumindest im Oberflächenbereich des Formteils enthält, **dadurch gekennzeichnet, daß** die mittlere Ausdehnung des blättchenförmigen Materials größer oder gleich der halben mittleren Korngröße des granularen Füllstoffs ist, daß der Anteil des blättchenförmigen Materials im Bereich von ca. 0,5 bis 4 Gew. %, bezogen auf die Gießmasse, liegt, wobei das blättchenförmige Material mit einer Vorzugsorientierung in der Polymermatrix parallel zur Oberfläche des Formteils angeordnet ist, und daß das Verhältnis der Dicke zur Ausdehnung der Partikel des blättchenförmigen Materials im Mittel kleiner oder gleich 0,02 beträgt.

2. Kunststofformteile nach Anspruch 1, **dadurch gekennzeichnet, daß** das blättchenförmige Material anorganischen Ursprungs ist.

3. Kunststofformteile nach Anspruch 1 oder 2, **dadurch gekennzeichnet, daß** die Härte des blättchenförmigen Materials ungefähr der Härte des anorganischen Füllstoffes entspricht.

4. Kunststofformteile nach einem der Ansprüche 1 bis 3, **dadurch gekennzeichnet, daß** das blättchenförmige Material bei Einwirkung von Wasser oder Wasserdampf auf die Formteiloberfläche keine signifikante Farbaufhellung an der Formteiloberfläche verursacht.

5. Kunststofformteile nach einem der Ansprüche 2 bis 4, **dadurch gekennzeichnet, daß** das blättchenförmige Material Glimmerpartikel umfaßt, welche zur Verringerung der Wasseraufnahmefähigkeit vorgeglüht sind.

6. Kunststofformteile nach einem der Ansprüche 4 oder 5, **dadurch gekennzeichnet, daß** das blättchenförmige Material mit einer Beschichtung zur Verminderung der Wasseraufnahmefähigkeit versehen ist.

7. Kunststofformteile nach einem der Ansprüche 2 bis 6, **dadurch gekennzeichnet, daß** das blättchenförmige Material schuppenartige Glaspartikel umfaßt.

8. Kunststofformteile nach einem der Ansprüche 1 bis 7, **dadurch gekennzeichnet, daß** der Durchmesser der Partikel des blättchenförmigen Materials in einer Ebene im Mittel größer oder gleich 30 µm beträgt.

9. Kunststofformteile nach einem der Ansprüche 1 bis 8, **dadurch gekennzeichnet, daß** die Dicke der Partikel des blättchenförmigen Materials ungefähr 0,5 µm oder weniger beträgt.

10. Kunststofformteile nach einem der Ansprüche 1 bis 9, **dadurch gekennzeichnet, daß** das blättchenförmige Material im fertigen Formteil 10 % oder mehr der Formteiloberfläche belegt.

11. Kunststofformteile nach einem der Ansprüche 1 bis 10, **dadurch gekennzeichnet, daß** der Brechungsindex des blättchenförmigen Materials auf den Brechungsindex der Polymer-Matrix abgestimmt ist.

12. Kunststofformteile nach einem der Ansprüche 1 bis 11, **dadurch gekennzeichnet, daß** die Partikel des blättchenförmigen Materials als Partikel mit einem Subtraktiv-Farbeffekt ausgebildet sind.

13. Kunststofformteile nach einem der Ansprüche 1 bis 12, **dadurch gekennzeichnet, daß** der anorganische Füllstoff mit einem Anteil von circa 50 bis 80 Gew. %, bezogen auf die Gießmasse, enthalten ist.

14. Kunststofformteile nach einem der Ansprüche 1 bis 13, **dadurch gekennzeichnet, daß** als anorganischer Füllstoff Quarzmehl, Quarzsand, Cristoballitmehl oder Cristoballitsand einzeln oder in Mischung enthalten ist.

15. Verfahren zur Herstellung von gegossenen Kunststofformteilen gemäß Anspruch 1 aus einem, gegebenenfalls Vorpolymere enthaltenden Monomerensirup, dem ein anorganischer Füllstoff zugemischt ist, wobei diese Mischung in die Gießform eingespeist und ausgehärtet wird, **dadurch gekennzeichnet, daß** dem Sirup vor dem Einspeisen in die Form eine aus blättchenförmigem Material bestehende Komponente in einer Menge von ca. 0,5 bis 4 Gew. % zugemischt wird, wobei das blättchenförmige Material so ausgewählt wird, daß das Verhältnis der Dicke zur Ausdehnung der Partikel des blättchenförmigen Materials im Mittel kleiner oder gleich 0,02 beträgt, und daß der Sirup so in die Form eingespeist wird, daß sich für die Anordnung der Partikel des blättchenförmigen Materials in der sich beim Aushärten bildenden Polymer-Matrix eine Vorzugsrichtung parallel zur Oberfläche der Kunststofformteile ergibt.

16. Verfahren nach Anspruch 15, **dadurch gekennzeichnet, daß** die Viskosität des Sirups auf 60 bis 200 mPa.s eingestellt wird.

17. Verfahren nach Anspruch 16, **dadurch gekennzeichnet, daß** die Viskosität des Sirups auf 80 bis 180 mPa.s eingestellt wird.

18. Verfahren nach Anspruch 16 oder 17, **dadurch gekennzeichnet, daß** die Viskosität mittels des Vorpolymergehalts des Sirups eingestellt wird.

19. Verfahren nach einem der Ansprüche 15 bis 18, **dadurch gekennzeichnet, daß** die Viskosität des Sirups auf die Form und Partikelgröße des blättchenförmigen Materials so abgestimmt ist, daß beim Gießvorgang die Vorzugsorientierung in der Anordnung der Partikel des blättchenförmigen Materials durch dabei auftretende Scherkräfte erhalten wird.

20. Verfahren nach einem der Ansprüche 15 bis 19, **dadurch gekennzeichnet, daß** die den Sirup, den anorganischen Füllstoff und das blättchenförmige Material enthaltende Mischung so in die Form eingespeist wird, daß sich bereits in dabei verwendeten Zuführmitteln eine Vorzugsorientierung der Partikel des blättchenförmigen Materials zumindest teilweise einstellt.

## Claims

1. Cast plastic mouldings having an organic polymer matrix that is filled with a granular inorganic filler and contains one further component composed of a platelet-type material at least in the surface region of the moulding, **characterized in that** the mean size of the platelet-type material is greater than or equal to half the mean particle size of the granular filler, **in that** the proportion of the platelet-type material is in the range from approximately 0.5 to 4% by weight, relative to the casting compound, the platelet-type material being arranged with a preferred orientation in the polymer matrix parallel to the surface of the moulding, and **in that** the ratio of the thickness to the size of the particles of the platelet-type material is on average less than or equal to 0.02.

2. Plastic mouldings according to Claim 1, **characterized in that** the platelet-type material is of inorganic origin.

3. Plastic mouldings according to Claim 1 or 2, **characterized in that** the hardness of the platelet-type material is approximately equal to the hardness of the inorganic filler.

4. Plastic mouldings according to any one of Claims 1 to 3, **characterized in that** the platelet-type material does not cause any significant colour brightening at the moulding surface on exposure to water or water vapour.

5. Plastic mouldings according to any one of Claims 2 to 4, **characterized in that** the platelet-type material comprises mica particles that are pre-roasted to reduce the water absorption capacity.

6. Plastic mouldings according to either of Claims 4 or 5, **characterized in that** the platelet-type material is provided with a coating to reduce the water absorption capacity.

7. Plastic mouldings according to any one of Claims 2 to 6, **characterized in that** the platelet-type material comprises flake-type glass particles.

8. Plastic mouldings according to any one of Claims 1 to 7, **characterized in that** the diameter of the particles of the platelet-type material in one plane is on average greater than or equal to 30 µm.

9. Plastic mouldings according to any one of Claims 1 to 8, **characterized in that** the thickness of the particles of the platelet-type material is approximately 0.5 µm or less.

10. Plastic mouldings according to any one of Claims 1 to 9, **characterized in that** the platelet-type material occupies 10% or more of the moulding surface in the finished moulding.

11. Plastic mouldings according to any one of Claims 1 to 10, **characterized in that** the refractive index of the platelet-type material is matched to the refractive index of the polymer matrix.

12. Plastic mouldings according to any one of Claims 1 to 11, **characterized in that** the particles of the platelet-type material are formed as particles having a subtractive colour effect.

13. Plastic mouldings according to any one of Claims 1 to 12, **characterized in that** the inorganic filler is contained in a proportion of approximately 50 to 80% by weight, relative to the casting compound.

14. Plastic mouldings according to any one of Claims 1 to 13, **characterized in that** quartz powder, quartz sand, cristobalite powder or cristobalite sand are contained individually or in a mixture as inorganic filler.

15. Method for the production of cast plastic mouldings in accordance with Claim 1 from a monomer syrup that optionally contains prepolymers and to which an inorganic filler has been added, this mixture being injected into the casting mould and cured, **characterized in that**, prior to injection into the mould, a component composed of platelet-type material is added to the syrup in an amount of approximately 0.5 to 4% by weight, the platelet-type material being selected in such a way that the ratio of the thickness to the size of the particles of the platelet-type material is on average less than or equal to 0.02, and **in that** the syrup is injected into the mould in such a way that a preferred direction parallel to the surface of the plastic mouldings results for the arrangement of the particles of the platelet-type material in the polymer matrix which forms during curing.

16. Method according to Claim 15, **characterized in that** the viscosity of the syrup is adjusted to 60 to 200 mPa•s.

17. Method according to Claim 16, **characterized in that** the viscosity of the syrup is adjusted to 80 to 180 mPa•s.

18. Method according to Claim 16 or 17, **characterized in that** the viscosity is adjusted by means of the prepolymer content of the syrup.

19. Method according to one of Claims 15 to 18, **characterized in that** the viscosity of the syrup is matched to the shape and particle size of the platelet-type material in such a way that, during the casting operation, the preferred orientation in the arrangement of the particles of the platelet-type material is obtained as a result of the shearing forces occurring in this process.

20. Method according to one of Claims 15 to 19, **characterized in that** the mixture containing the syrup, the inorganic filler and the platelet-type material is injected into the mould in such a way that a preferred orientation of the particles of the platelet-type material is already established at least partially in the supply means used in the process.

## Revendications

1. Pièces moulées en matière plastique coulées, ayant une matrice polymère organique chargée d'une matière de charge inorganique granulaire et contenant un autre composant en matériau lamellaire au moins dans la partie superficielle de la pièce moulée, **caractérisées en ce que** l'allongement moyen du matériau lamellaire est supérieur ou égal à la moitié de la grosseur moyenne de grain de la matière de charge granulaire, **en ce que** la proportion de matériau lamellaire est de l'ordre d'environ 0,5 à 4 % en poids par rapport à la masse coulée, le matériau lamellaire étant disposé selon une orientation préférentielle dans la matrice polymère parallèlement à la surface de la pièce moulée et **en ce que** le rapport de l'épaisseur à l'allongement des particules du matériau lamellaire est en moyenne inférieur ou égal à 0,02.

2. Pièces moulées en matière plastique selon la revendication 1, **caractérisées en ce que** le matériau lamellaire est d'origine inorganique.

3. Pièces moulées en matière plastique selon la revendication 1 ou 2, **caractérisées en ce que** la dureté du matériau lamellaire correspond approximativement à la dureté de la matière de charge inorganique.

4. Pièces moulées en matière plastique selon une des revendications 1 à 3, **caractérisées en ce que** le matériau lamellaire sous l'effet d'eau ou de vapeur d'eau sur la surface des pièces moulées ne provoque aucun éclaircissage significatif de la surface des pièces moulées.

5. Pièces moulées en matière plastique selon une des revendications 2 à 4, **caractérisées en ce que** le matériau lamellaire comprend des particules de mica qui ont subi un recuit préalable en vue de l'abaissement de leur capacité d'absorption d'eau.

6. Pièces moulées en matière plastique selon une des revendications 4 ou 5, **caractérisées en ce que** le matériau lamellaire est doté d'un revêtement en vue de l'abaissement de sa capacité d'absorption d'eau.

7. Pièces moulées en matière plastique selon une des revendications 2 à 6, **caractérisées en ce que** le matériau lamellaire comprend des particules de verre de type écailles.

8. Pièces moulées en matière plastique selon une des revendications 1 à 7, **caractérisées en ce que** le diamètre des particules du matériau lamellaire dans un plan est en moyenne supérieur ou égal à 30 µm.

9. Pièces moulées en matière plastique selon une des revendications 1 à 8, **caractérisées en ce que** l'épaisseur des particules du matériau lamellaire est inférieure ou égale à approximativement 0,5 µm.

10. Pièces moulées en matière plastique selon une des revendications 1 à 9, **caractérisées en ce que** le matériau lamellaire dans la pièce moulée finie occupe 10 % ou plus de la surface de la pièce moulée.

11. Pièces moulées en matière plastique selon une des revendications 1 à 10, **caractérisées en ce que** l'indice de réfraction du matériau lamellaire est coordonné avec l'indice de réfraction de la matrice polymère.

12. Pièces moulées en matière plastique selon une des revendications 1 à 11, **caractérisées en ce que** les particules du matériau lamellaire sont constituées par des particules ayant un effet colorant soustractif.

13. Pièces moulées en matière plastique selon une des revendications 1 à 12, **caractérisées en ce que** la matière de charge inorganique est présente en une proportion d'environ 50 à 80 % en poids, par rapport à la masse coulée.

14. Pièces moulées en matière plastique selon une des revendications 1 à 13, **caractérisées en ce que** sont utilisés comme matière de charge inorganique de la poudre de quartz, du sable silicieux, de la poudre de cristobalite ou du sable de cristobalite, seuls ou en mélange.

15. Procédé de fabrication de pièces moulées en matière plastique coulées selon la revendication 1 à partir d'un sirop de monomères contenant le cas échéant des prépolymères et auquel est ajoutée une matière de charge inorganique, ce mélange étant introduit et durci dans le moule, **caractérisé en ce qu'**on ajoute au sirop, avant son introduction dans le moule, un composant constitué par un matériau lamellaire en une quantité d'environ 0,5 à 4 % en poids, le matériau lamellaire étant sélectionné de façon telle que le rapport de l'épaisseur à l'allongement des particules du matériau malellaire est en moyenne inférieur ou égal à 0,02 et **en ce que** le sirop est introduit dans le moule de façon à obtenir une orientation préférentielle parallèlement à la surface des pièces moulées en matière plastique pour la disposition des particules du matériau lamellaire dans la matrice polymère se formant au cours du durcissement.

16. Procédé selon la revendication 15, **caractérisé en ce que** la viscosité du sirop est ajustée entre 60 et 200 mPa.s.

17. Procédé selon la revendication 16, **caractérisé en ce que** la viscosité du sirop est ajustée entre 80 et 180 mPa.s.

18. Procédé selon la revendication 16 ou 17, **caractérisé en ce que** la viscosité est ajustée au moyen de la teneur en prépolymères du sirop.

19. Procédé selon une des revendications 15 à 18, **caractérisé en ce que** la viscosité du sirop est adaptée au moule et à la dimension de particule du matériau lamellaire de façon à obtenir au cours de l'opération de coulée l'orientation préférentielle dans la disposition des particules du matériau lamellaire sous l'effet des forces de cisaillement s'exerçant.

20. Procédé selon une des revendications 15 à 19, **caractérisé en ce que** le mélange contenant le sirop, la matière de charge inorganique et le matériau lamellaire est introduit dans le moule de façon qu'une orientation préférentielle des particules du matériau lamellaire s'ajuste déjà au moins partiellement dans les moyens d'alimentation utilisés.
